# EUROPEAN PATENT APPLICATION

(11) **EP 4 206 813 A1**
(43) Date of publication of application: **05.07.2023**
(21) Application number: 22170350.7
(22) Date of filing: 27.04.2022
(51) Int. Cl.: G02F 1/16766, G02F 1/1345, H04B 5/00, H01Q 1/22

(54) **E-PAPER DISPLAY DEVICE**

(30) Priority: 30.12.2021 TW 110149769
(71) Applicant: SES-imagotag, 92000 Nanterre (FR)
(72) Inventor: HUANG, Chao-Hsuan, 74144 Tainan City (TW); WANG, Yew-Chun, 74144 Tainan City (TW)
(74) Representative: Zimmermann, Tankred Klaus

(57) **Abstract**

An e-paper display device includes a driving substrate, an e-paper film, a driving chip, a connecting circuit board and an NFC antenna. The driving substrate includes an e-paper arrangement area and a peripheral area. The e-paper film is arranged on the e-paper arrangement area. The driving chip is arranged on the peripheral area and is electrically connected to the driving substrate. The driving chip drives the e-paper film to display images through the driving substrate. The connecting circuit board is connected to the side of the driving substrate opposite to the driving chip, and is electrically connected to the driving chip and the driving substrate. The NFC antenna is electrically connected to an NFC transceiver circuit of the driving chip. The NFC antenna is arranged on the peripheral area or the connecting circuit board.

## Description

### BACKGROUND

### Technology Field

The present invention relates to a display device and, in particular, to an e-paper display device with a near-field communication (NFC) function.

### Description of Related Art

Regarding the existing display technologies, both the liquid crystal display device and the light-emitting diode display device still have the requirement of continuously supplying power. That is, the display device displays images while still needing the continuous power consumption. Therefore, a bi-stable electronic paper (e-paper) display device was developed accordingly. When the bi-stable e-paper display device displays an image or screen, it does not need to input additional power but the image or screen can be retained. In the e-paper display device, only when it changes to another state or displays another screen, the additional power is necessary. The features of low power consumption and memorability make the e-paper display device become one of the first choices for next-generation display devices.

Moreover, in order to increase the applications of consumer electronic products, some manufacturers add the function of near-field communication (NFC) to the electronic products. The near-field communication can provide a transmission route to transmit information (e.g., commands, music, pictures, business cards, data, files, etc.) from one electronic device to another without physical circuit connection. In addition to the convenience of transmission, it can also improve the applications of electronic devices. For example, it can replace most occasions requiring IC card, such as access control, tickets, credit card payment, or receiving advertising messages. Therefore, electronic products with near-field communication function are definitely an inevitable trend.

### SUMMARY

One or more exemplary embodiment of this invention is to provide a novel structure of e-paper display device having near-field communication (NFC) function.

In an exemplary embodiment, an e-paper display device includes a driving substrate, an e-paper film, a driving chip, a connecting circuit board, and an NFC antenna. The driving substrate includes an e-paper arrangement area and a peripheral area adjacent to the e-paper arrangement area. The e-paper film is arranged on the e-paper arrangement area. The driving chip is arranged on the peripheral area and electrically connected to the driving substrate. The driving chip drives the e-paper film to display images through the driving substrate, and the driving chip includes an NFC transceiver circuit. The connecting circuit board is connected to one side of the driving substrate opposite to the driving chip. The connecting circuit board is electrically connected to the driving chip and the driving substrate. The NFC antenna is electrically connected to the NFC transceiver circuit of the driving chip. The NFC antenna is arranged on the peripheral area of the driving substrate or the connecting circuit board.

In one embodiment, the e-paper film is a microcapsule e-paper, a microcup e-paper, or a cholesteric liquid crystal e-paper.

In one embodiment, the NFC transceiver circuit is formed in the driving chip by IC manufacturing processes.

In one embodiment, the driving substrate and the e-paper film form a display module, and the driving chip further includes a scan driver or/and a data driver for the display module.

In one embodiment, the e-paper arrangement area has a side edge corresponding to the driving chip, and a pattern of the NFC antenna is disposed adjacent to the side edge.

In one embodiment, a pattern of the NFC antenna is disposed along at least one side edge of the e-paper arrangement area.

In one embodiment, when the NFC antenna is arranged on the periphery area of the driving substrate, a pattern of the NFC antenna further extends from the periphery area to the connecting circuit board.

In one embodiment, when the NFC antenna is arranged on the connecting circuit board, a pattern of the NFC antenna is located on a region of the connecting circuit board, which is not configured with circuit.

In one embodiment, when the NFC antenna is arranged on the connecting circuit board, a pattern of the NFC antenna further extends from the connecting circuit board to the periphery area of the driving substrate.

In one embodiment, the e-paper display device further includes a system control board connected to one side of the connecting circuit board away from the driving substrate, and the system control board is electrically connected to the driving chip and the driving substrate via the connecting circuit board.

As mentioned above, in the e-paper display device of this invention, the driving chip is arranged on the peripheral area and electrically connected to the driving substrate. The driving chip drives the e-paper film to display images through the driving substrate, and the driving chip includes an NFC transceiver circuit. The connecting circuit board is connected to one side of the driving substrate opposite to the driving chip. The connecting circuit board is electrically connected to the driving chip and the driving substrate. The NFC antenna is electrically connected to the NFC transceiver circuit of the driving chip. The NFC antenna is arranged on the peripheral area of the driving substrate or the connecting circuit board. Based on the above design, this invention provides a novel structure of e-paper display device having NFC function. Since it is not needed to continuously supply power before refreshing the screen, when the e-paper display device of this invention utilizes the NFC transceiver circuit and the NFC antenna to transmit or/and receive wireless signals, the signals will not be interfered, and the signal transmission quality can be improved.

### BRIEF DESCRIPTION OF THE DRAWINGS

The invention will become more fully understood from the detailed description and accompanying drawings, which are given for illustration only, and thus are not limitative of the present invention, and wherein:
FIG. 1 is a schematic diagram showing an e-paper display device according to an embodiment of this invention; and
FIGS. 2 to 5 are schematic diagrams showing e-paper display devices according to different embodiments of this invention.

### DETAILED DESCRIPTION OF THE INVENTION

The present invention will be apparent from the following detailed description, which proceeds with reference to the accompanying drawings, wherein the same references relate to the same elements.

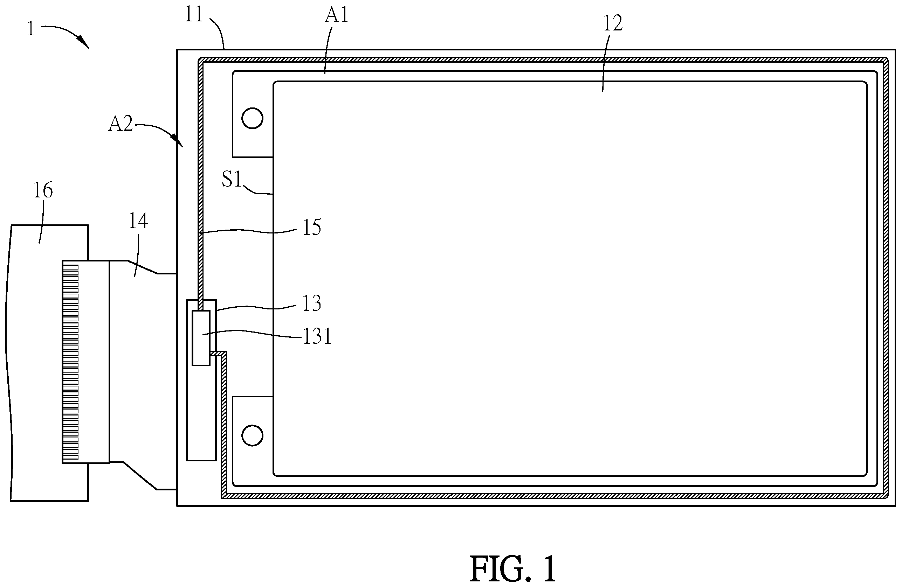

FIG. 1 is a schematic diagram showing an e-paper display device 1 according to an embodiment of this invention. With reference to FIG. 1, the e-paper display device 1 includes a driving substrate 11, an e-paper film 12, a driving chip 13, a connecting circuit board 14, and an NFC antenna 15. The e-paper display device 1 further includes a system control board 16.

The surface of the driving substrate 11 is configured with an e-paper arrangement area A1 and a peripheral area A2, which is located adjacent to the e-paper arrangement area A1. In this case, the e-paper arrangement area A1 is configured for the arrangement of the e-paper film 12, and the peripheral area A2 refers to the area of the driving substrate 11 other than the e-paper arrangement area A1. The e-paper arrangement area A1 and the peripheral area A2 are disposed adjacent to each other. In this embodiment, the peripheral area A2 is the area surrounding the e-paper arrangement area A1.

The e-paper film 12 is arranged on the e-paper arrangement area A1 of the driving substrate 11, and the driving substrate 11 can control the e-paper film 12 to display image(s). In some embodiments, the driving substrate 11 includes a plurality of pixels, and each pixel has at least one switch, such as a thin-film transistor (TFT), so that the driving substrate 11 is an AM (Active Matrix) TFT substrate for controlling the electric field of each individual pixel. In some embodiments, the driving substrate 11 can be a PM (Passive Matrix) driving substrate, and this invention is not limited thereto. The material of the driving substrate 11 can be changed based on the product requirement. In this embodiment, the driving substrate 11 can be a glass substrate, a plastic substrate, or a flexible substrate, and is configured with a pixel circuit. Herein, the material of the flexible substrate can be, for example but not limited to, polyimide (PI).

The e-paper film 12 is a bi-stable e-paper display device, which has the advantages of low power consumption and wide viewing angle. For example, the e-paper film 12 can be a microcapsule e-paper, a microcup e-paper, or a cholesteric liquid crystal e-paper, but this invention is not limited thereto. In some embodiments, when the e-paper film 12 is a microcapsule e-paper or a microcup e-paper, the display medium may include electrophoretic substances, and the electrophoretic substances include a plurality of charged light-colored pigment particles and a dark-colored medium solution. The pigment particles and the medium solution are respectively accommodated in a plurality of microcapsules, and an adhesive is used to bond the microcapsules. In another case, the electrophoretic substances may include dark-colored pigment particles and a light-colored medium solution. In another case, the electrophoretic substances may include pigment particles of multiple colors and a light-colored medium solution. This invention is not limited thereto.

The driving chip 13 is arranged on the peripheral area A2 of the driving substrate 11 and electrically connected to the driving substrate 11. The driving chip 13 can drive the e-paper film 12 to display images through the driving substrate 11. Herein, the driving chip 13 is arranged on the peripheral area A2 by COG (Chip On Glass) technology. In some embodiments, the driving substrate 11 and the e-paper film 12 together form a display module, and the driving chip 13 further includes a scan driver or/and a data driver for the display module. In other words, the driving chip 13 has the scan driving function or the data driving function for driving the display module; or the driving chip 13 has the scan driving function and the data driving function (integrated function) for driving the display module. This invention is not limited thereto. In order to transmit or/and receive the NFC wireless signals, the driving chip 13 of this embodiment includes an NFC transceiver circuit 131. Specifically, in some embodiments, when manufacturing the driving chip 13, the scan driver or/and the data driver as well as the NFC transceiver circuit 131 are integrated and formed in the driving chip 13 by the IC manufacturing processes (or semiconductor manufacturing processes). Accordingly, the e-paper display device 1 can be provided with the transmitting and receiving functions for wireless signals via the NFC transceiver circuit 131 of the driving chip 13.

The connecting circuit board 14 is connected to one side of the driving substrate 11 opposite to the driving chip 13, and the connecting circuit board 14 is electrically connected to the driving chip 13 and the driving substrate 11. The system control board 16 is connected to one side of the connecting circuit board 14 away from the driving substrate 11. In this embodiment, the connecting circuit board 14 can be, for example but not limited to, a flexible circuit board. The system control board 16 and the driving substrate 11 (as well as the driving chip 13) are arranged at opposites of the connecting circuit board 14, and the connecting circuit board 14 is electrically connected to the driving chip 13, the driving substrate 11 and the system control board 16. Accordingly, the system control board 16 can be electrically connected to the driving chip 13 and the driving substrate 11 through the connecting circuit board 14, so that the control signals for driving the e-paper film 12 can be transmitted to the driving chip 13 and the driving substrate 11 via the connecting circuit board 14 so as to control the e-paper film 12 to display image(s).

The NFC antenna 15 is electrically connected to the NFC transceiver circuit 131 of the driving chip 13. In this case, the NFC antenna 15 is arranged on the peripheral area A2 of the driving substrate 11 or the connecting circuit board 14. Specifically, the pattern of the NFC antenna 15 can be disposed on the peripheral area A2 of the driving substrate 11 or the connecting circuit board 14; or the pattern of the NFC antenna 15 can be disposed on the peripheral area A2 of the driving substrate 11 and the connecting circuit board 14. Accordingly, the NFC transceiver circuit 131 can transmit and receive the NFC wireless signals via the NFC antenna 15. In some embodiments, the pattern of the NFC antenna 15 can be disposed along at least one side edge S1 of the e-paper arrangement area A1. In some embodiments, the e-paper arrangement area A1 has a side edge S1 corresponding to the driving chip 13, and the pattern of the NFC antenna 15 is disposed next to the side edge S1. In this embodiment, the NFC antenna 15 is disposed on the peripheral area A2 of the driving substrate 11, and two ends of the pattern of the NFC antenna 15 are connected to the NFC transceiver circuit 131 of the driving chip 13. For the sake of transmitting and receiving the NFC signals and the requirement for antenna impedance, the pattern of the NFC antenna 15 is, for example, disposed along four side edges (top, bottom, left and right side edges) of the e-paper arrangement area A1. In different embodiments, for the sake of transmitting and receiving the NFC signals and the requirement for antenna impedance, the pattern of the NFC antenna 15 and the arrangement or model thereof can be different.

As mentioned above, in the existing flat display devices, the NFC antenna and NFC transceiver circuit (for performing the NFC function) are mostly formed on the system control board, and the system control board is usually folded underneath of the display module (driving substrate). Therefore, the conductive wires of the display module (driving substrate) may easily interfere the transmitting and receiving of NFC signals. On the contrary, in the e-paper display device 1 of this embodiment, the driving chip 13 configured to drive the e-paper film 12 to display images includes the NFC transceiver circuit 131, and the NFC antenna 15 is arranged on the peripheral area A2 of the driving substrate 11 and disposed along the four side edges surrounding the e-paper arrangement area A1. Accordingly, even if the system control board 16 is folded underneath the driving substrate 11, since it is not needed to continuously supply power to the display module, which is constructed by the driving substrate 11 and the e-paper film 12, before refreshing the screen, the NFC wireless signals, which are transmitted and received via the NFC transceiver circuit 131 and the NFC antenna 15, are not interfered, thereby obtaining a better signal transmission quality.

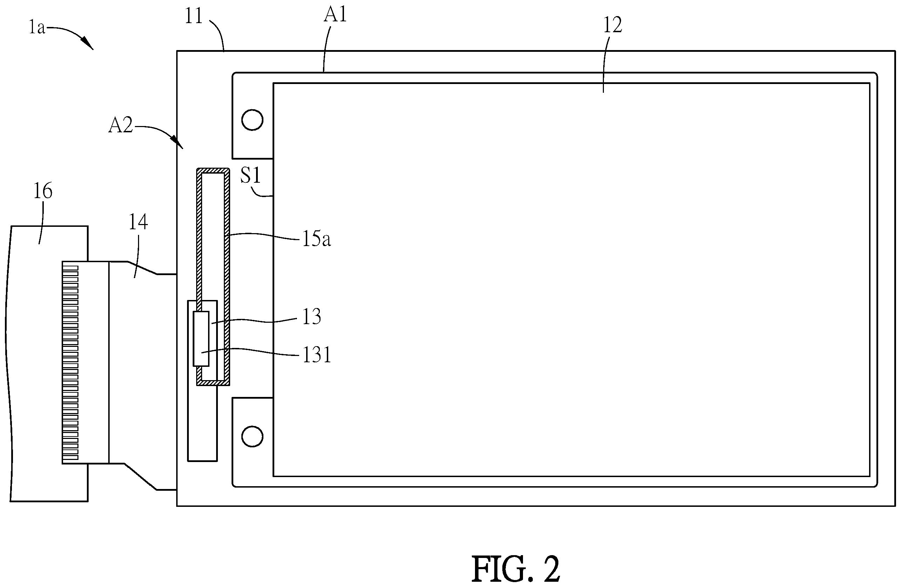

FIGS. 2 to 5 are schematic diagrams showing e-paper display devices according to different embodiments of this invention.

The component arrangements and connections of the e-paper display device 1a of this embodiment as shown in FIG. 2 are mostly the same as those of the e-paper display device 1 of the previous embodiment. Unlike the previous embodiment, for the sake of transmitting and receiving the NFC signals and the requirement for antenna impedance, the pattern of the NFC antenna 15a of the e-paper display device 1a is disposed next to the side edge S1 of the e-paper arrangement area A1 corresponding to the driving chip 13, and the pattern has four 90-degree turning corners.

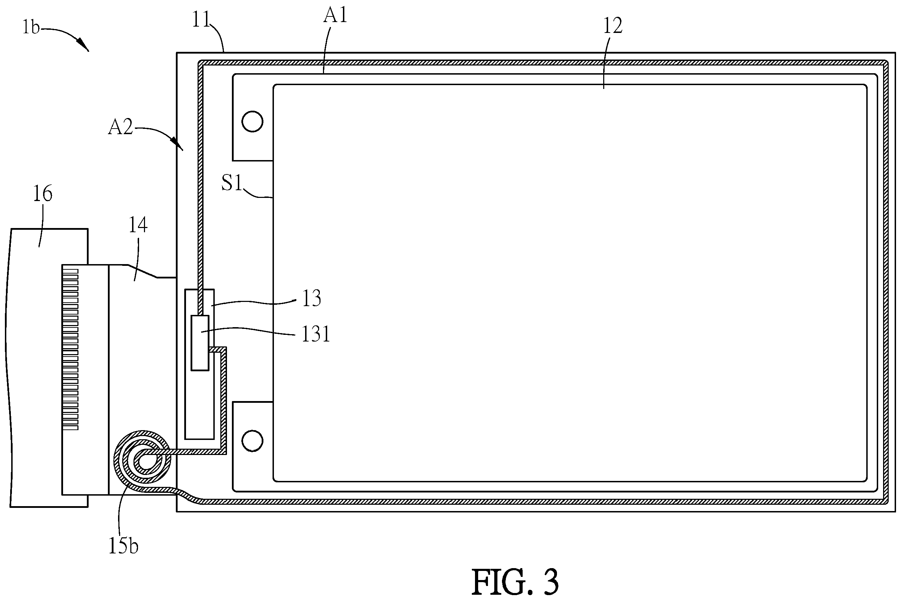

The component arrangements and connections of the e-paper display device 1b of this embodiment as shown in FIG. 3 are mostly the same as those of the e-paper display device 1 of the previous embodiment. Unlike the previous embodiment, for the sake of transmitting and receiving the NFC signals and the requirement for antenna impedance, the pattern of the NFC antenna 15b of the e-paper display device 1b is a line starting from the NFC transceiver circuit 131, running along four side edges S1 of the e-paper arrangement area A1, extending from the peripheral area A2 of the driving substrate 11 to the connecting circuit board 14, running some circles on the connecting circuit board 14, and then extending back the driving substrate 11 to connect to the NFC transceiver circuit 131. In another explanation, the pattern of the NFC antenna 15b is a line starting from the NFC transceiver circuit 131, extending from the peripheral area A2 of the driving substrate 11 to the connecting circuit board 14, running some circles on the connecting circuit board 14, extending back the driving substrate 11, running along four side edges S1 of the e-paper arrangement area A1, and then connecting to the NFC transceiver circuit 131. In order to avoid the short-circuit between the NFC antenna 15b and the circuit on the connecting circuit board 14, the part of the pattern of the NFC antenna 15b on the connecting circuit board 14 is arranged on a part of the connecting circuit board 14 configured without circuits. Specifically, the part of the connecting circuit board 14 configured without circuits indicates a blank area of the connecting circuit board 14 which is not configured with any wires or/and chips. To be noted, although FIG. 3 shows that the pattern of the NFC antenna 15b includes some overlapped parts, but in practice, the overlapped parts can be separated by an insulation layer and be electrically connected by through holes.

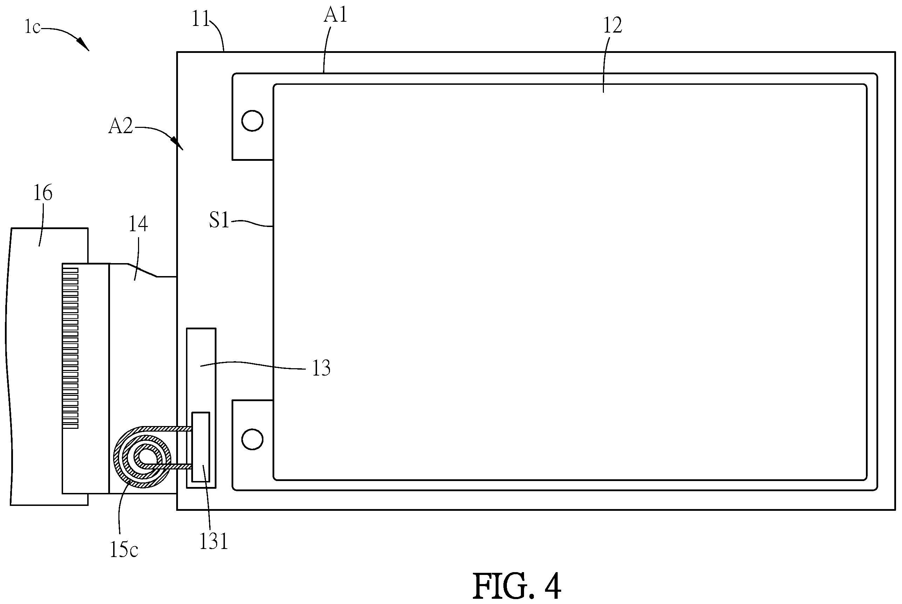

The component arrangements and connections of the e-paper display device 1c of this embodiment as shown in FIG. 4 are mostly the same as those of the e-paper display device 1 of the previous embodiment. Unlike the previous embodiment, for the sake of transmitting and receiving the NFC signals and the requirement for antenna impedance, two ends of the NFC antenna 15c of the e-paper display device 1c are connected to the NFC transceiver circuit 131, and the pattern of the NFC antenna 15c is mostly disposed on the connecting circuit board 14 (the part configured without circuit). In this embodiment, the part of the pattern of the NFC antenna 15c on the connecting circuit board 14 also forms some circles.

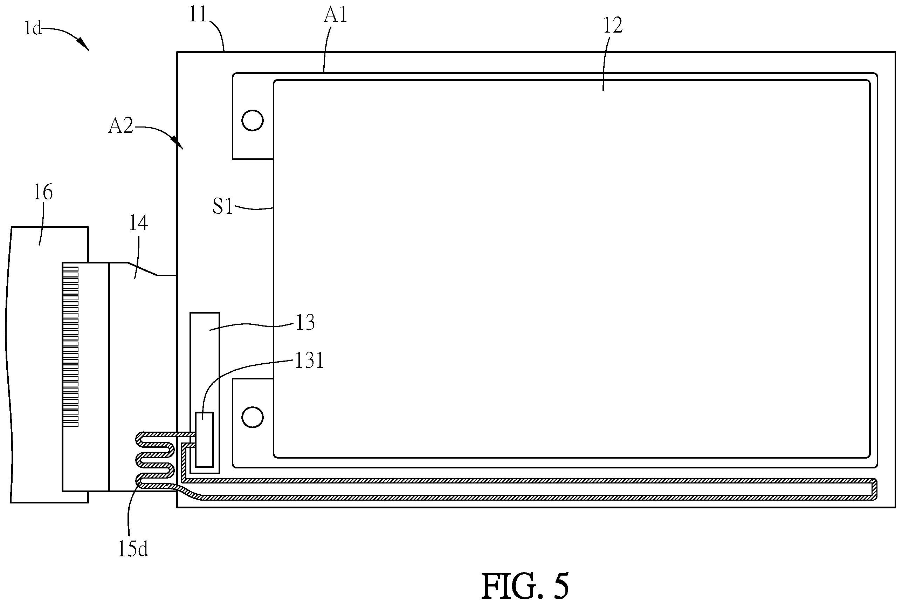

The component arrangements and connections of the e-paper display device 1d of this embodiment as shown in FIG. 5 are mostly the same as those of the e-paper display device 1 of the previous embodiment. Unlike the previous embodiment, for the sake of transmitting and receiving the NFC signals and the requirement for antenna impedance, the pattern of the NFC antenna 15d of the e-paper display device 1d includes a line starting from the NFC transceiver circuit 131, extending to the connecting circuit board 14, running on the part of the connecting circuit board 14 configured without circuits, and then extending back the driving substrate 11 to connect to the NFC transceiver circuit 131. In this embodiment, the part of the pattern of the NFC antenna 15d on the connecting circuit board 14 includes five U-turns (180-degree turns), and the line of the pattern extending back the driving substrate 11 further runs along one side edge (bottom side edge) of the e-paper arrangement area A1 (also includes some turning corners).

The patterns and extension arrangements of the NFC antennas in the above embodiments are only examples. The designer can design different patterns and extension arrangements according to transmitting and receiving the NFC signals and the requirement for antenna impedance, and this invention is not limited thereto.

In summary, in the e-paper display device of this invention, the driving chip is arranged on the peripheral area and electrically connected to the driving substrate. The driving chip drives the e-paper film to display images through the driving substrate, and the driving chip includes an NFC transceiver circuit. The connecting circuit board is connected to one side of the driving substrate opposite to the driving chip. The connecting circuit board is electrically connected to the driving chip and the driving substrate. The NFC antenna is electrically connected to the NFC transceiver circuit of the driving chip. The NFC antenna is arranged on the peripheral area of the driving substrate or the connecting circuit board. Based on the above design, this invention provides a novel structure of e-paper display device having NFC function. Since it is not needed to continuously supply power before refreshing the screen, when the e-paper display device of this invention utilizes the NFC transceiver circuit and the NFC antenna to transmit or/and receive wireless signals, the signals will not be interfered, and the signal transmission quality can be improved.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. An e-paper display device, comprising:
a driving substrate comprising an e-paper arrangement area and a peripheral area adjacent to the e-paper arrangement area;
an e-paper film arranged on the e-paper arrangement area;
a driving chip arranged on the peripheral area and electrically connected to the driving substrate, wherein the driving chip drives the e-paper film to display images through the driving substrate, and the driving chip comprises a near-field communication transceiver circuit;
a connecting circuit board connected to one side of the driving substrate opposite to the driving chip, wherein the connecting circuit board is electrically connected to the driving chip and the driving substrate; and
a near-field communication antenna electrically connected to the near-field communication transceiver circuit of the driving chip;
wherein, the near-field communication antenna is arranged on the peripheral area of the driving substrate or the connecting circuit board.

2. The e-paper display device of claim 1, wherein the e-paper film is a microcapsule e-paper, a microcup e-paper, or a cholesteric liquid crystal e-paper.

3. The e-paper display device of claim 1, wherein the near-field communication transceiver circuit is formed in the driving chip by IC manufacturing processes.

4. The e-paper display device of claim 1, wherein the driving substrate and the e-paper film form a display module, and the driving chip further comprises a scan driver or/and a data driver for the display module.

5. The e-paper display device of claim 1, wherein the e-paper arrangement area has a side edge corresponding to the driving chip, and a pattern of the near-field communication antenna is disposed adjacent to the side edge.

6. The e-paper display device of claim 1, wherein a pattern of the near-field communication antenna is disposed along at least one side edge of the e-paper arrangement area.

7. The e-paper display device of claim 1, wherein when the near-field communication antenna is arranged on the periphery area of the driving substrate, a pattern of the near-field communication antenna further extends from the periphery area to the connecting circuit board.

8. The e-paper display device of claim 1, wherein when the near-field communication antenna is arranged on the connecting circuit board, a pattern of the near-field communication antenna is located on a region of the connecting circuit board, which is not configured with circuit.

9. The e-paper display device of claim 1, wherein when the near-field communication antenna is arranged on the connecting circuit board, a pattern of the near-field communication antenna further extends from the connecting circuit board to the periphery area of the driving substrate.

10. The e-paper display device of claim 1, further comprising:
a system control board connected to one side of the connecting circuit board away from the driving substrate, wherein the system control board is electrically connected to the driving chip and the driving substrate via the connecting circuit board.
